(19) Europäisches Patentamt
European Patent Office
Office européen des brevets

(11) **EP 2 871 897 B1**

(12) **EUROPEAN PATENT SPECIFICATION**

(45) Date of publication and mention
of the grant of the patent:
**21.03.2018  Bulletin 2018/12**

(51) Int Cl.:
***H04W 72/12*** *(2009.01)*       ***H04W 72/04*** *(2009.01)*
***H04W 28/02*** *(2009.01)*

(21) Application number: **13813450.7**

(22) Date of filing: **05.04.2013**

(86) International application number:
**PCT/JP2013/002364**

(87) International publication number:
**WO 2014/006800 (09.01.2014 Gazette 2014/02)**

(54) **BASE STATION DEVICE, COMMUNICATION CONTROL METHOD, AND NON-TRANSITORY COMPUTER-READABLE MEDIUM CONTAINING COMMUNICATION CONTROL PROGRAM**

BASISSTATIONSVORRICHTUNG, KOMMUNIKATIONSSTEUERUNGSVERFAHREN UND ÜBERGANGSLOSES COMPUTERLESBARES MEDIUM MIT EINEM KOMMUNIKATIONSSTEUERUNGSPROGRAMM

DISPOSITIF DE STATION DE BASE, PROCÉDÉ DE COMMANDE DE COMMUNICATION, ET SUPPORT LISIBLE PAR ORDINATEUR NON TRANSITOIRE CONTENANT UN PROGRAMME DE COMMANDE DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2012   JP 2012152624**

(43) Date of publication of application:
**13.05.2015   Bulletin 2015/20**

(73) Proprietor: **NEC Corporation
Tokyo 108-8001 (JP)**

(72) Inventor: **INAIDA, Yusuke
TokyoM108-8001 (JP)**

(74) Representative: **MacDougall, Alan John Shaw
Mathys & Squire LLP
The Shard
32 London Bridge Street
London SE1 9SG (GB)**

(56) References cited:
**EP-A1- 2 268 092        EP-A1- 2 385 721
WO-A1-2009/116497      JP-A- 2003 235 071
JP-A- 2010 087 847       JP-A- 2012 009 987
US-A1- 2008 186 862     US-A1- 2011 044 262**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

**Technical Field**

The present invention relates to a base station apparatus, a communication control method, and a non-transitory computer readable medium storing a communication control program and, in particular, to a technology to allocate a resource for communication to a terminal device that performs communication through the base station apparatus.

**Background Art**

In a wireless communication system, a limited radio resource in a radio base station is shared among a plurality of wireless terminals. The radio base station communicates with the wireless terminals by allocating the radio resource to the wireless terminals. As described above, it is called scheduling to decide the wireless terminal to which the radio resource is allocated and to allocate the radio resource to the decided wireless terminal.

However, the radio resource is limited as mentioned above, and thus when the radio base station is congested by increase in traffic or increase in the number of wireless terminals, the radio resource becomes tight, and communication becomes hard to perform. A state where communication is hard to perform due to congestion as described above is generally called a congestion state.

Here, a technology to perform scheduling according to a congestion degree is disclosed in Patent Literature 1. The technology disclosed in Patent Literature 1 is the technology in which a strict priority difference is set between a terminal with low priority and a terminal with high priority to thereby perform scheduling when a radio base station is congested, and in which a moderate priority difference is set between the terminal with low priority and the terminal with high priority to thereby perform scheduling when the radio base station is not congested.

However, since the technology disclosed in Patent Literature 1 is not the scheduling in consideration of radio resource allocation delay due to congestion, there is a problem that it takes time before the radio resource is allocated to the wireless terminal when the radio base station is congested. The reason is that when the number of wireless terminals to which the radio resource should be allocated increases at the time of congestion of the radio base station, it takes time before the radio resource is allocated to each wireless terminal, which is not taken into consideration.

For example, there is LTE (Long Term Evolution) as a communication scheme that is standardized by 3GPP (3rd Generation Partnership Project), and is currently started to be commercially used. In the LTE, a radio base station can instruct a wireless terminal to allocate a radio resource for each subframe (each 1 ms). Specifically, the radio resource is allocated to the wireless terminal for 1 ms by one allocation. Accordingly, assuming that the number of wireless terminals to which the radio resource is allocated for each 1 ms is one, and that the total number of wireless terminals to which the radio resource should be allocated is 1000, it takes 1 seconds at the shortest before the radio resource is allocated to all the wireless terminals at least once.

When a large delay occurs as described above, in spite of a packet from the wireless terminal having arrived at a transmission destination, an ACK (Acknowledgement) of a TCP (Transmission Control Protocol) does not arrive in time, and the wireless terminal detects time-out and retransmits the packet. As a result, there are possibilities that communication efficiency becomes deteriorated, an application executed in the wireless terminal does not operate as expected due to communication delay, etc.

EP 2,268,092 A1 discloses a base station communicating with user equipments using shared channels. The base station includes a congestion level estimation unit estimating a congestion level of a cell; a priority-level/desired-value changing unit changing priority levels or desired minimum transmission rates of data to be transmitted by the user equipments or the base station based on the congestion level of the cell; and a selection unit selecting one or more of the user equipments to which radio resources are to be allocated based on the changed priority levels or the changed desired minimum transmission rates of the data.

EP 2 385 721 A1 relates to quality of service differentiation in a mobile network and proposes a method wherein, in case of congestion, a throttling rate is determined at which to throttle the traffic of a user based on a weighted fair bit rate associated with the user.

**Citation List**

**Patent Literature**

Patent Literature 1: International Patent Publication No. WO2009/116497

**EP 2 871 897 B1**

## Summary of Invention

### Technical Problem

As mentioned above, there is a problem that allocation of the resource to the terminal device in the base station apparatus is delayed when the base station apparatus is congested.

In order to solve the problem as mentioned above, an object of the present invention is to provide a base station apparatus, a communication control method, and a communication control program that can reduce resource allocation delay to a terminal device even when the base station apparatus is congested.

### Solution to Problem

The invention is set out in the independent claims appended hereto, and preferred embodiments are indicated in the dependent claims that follow.

A base station apparatus according to a first example that allocates a resource for communication to a terminal device, including: congestion degree estimation means for estimating a congestion degree in the base station apparatus; and resource control means for controlling a resource allocation amount to the terminal device based on the congestion degree estimated by the congestion degree estimation means.

A communication control method according to a second example for allocating a resource for communication to a terminal device, includes a step of estimating a congestion degree by communication of the terminal device, and a step of controlling a resource allocation amount to the terminal device based on the estimated congestion degree.

A communication control program according to a third example for allocating a resource for communication to a terminal device in a base station apparatus, the communication control program making the base station apparatus execute: processing of estimating a congestion degree by communication of the terminal device; and processing of controlling a resource allocation amount to the terminal device based on the estimated congestion degree.

### Advantageous Effects of Invention

According to the above-mentioned examples, there can be provided the base station apparatus, the communication control method, and the communication control program that can reduce resource allocation delay to the terminal device even when the base station apparatus is congested.

### Brief Description of Drawings

Fig. 1 is a block diagram showing a configuration of the wireless communication system according to the embodiment of the present invention.
Fig. 2 is a diagram showing a functional block of the radio base station according to the embodiment of the present invention.
Fig. 3 is a flow chart showing one example of operation of the scheduling unit according to the embodiment of the present invention.
Fig. 4 is a diagram showing a functional block of the base station apparatus according to the embodiment of the present invention.

### Description of Embodiments

<Embodiment of Invention>

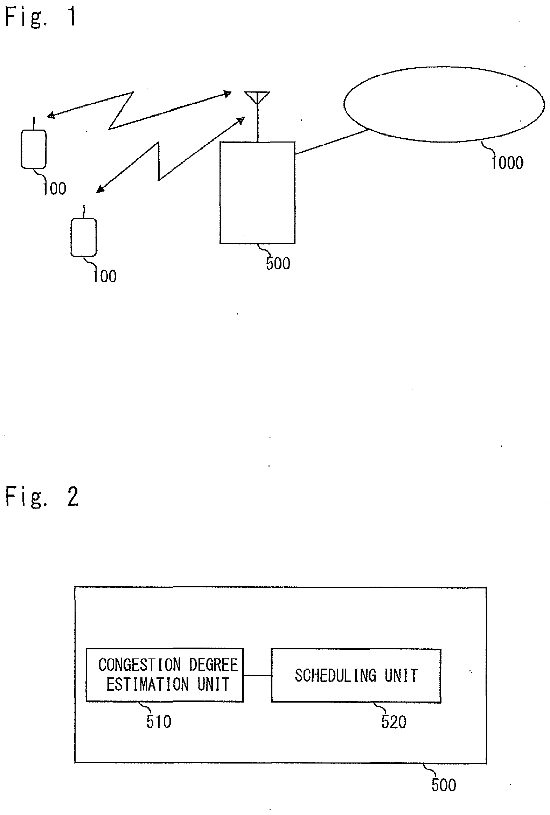

Hereinafter, an embodiment of the present invention will be explained in detail with reference to drawings. First, a wireless communication system 1 according to the embodiment of the present invention will be explained with reference to Fig. 1. Fig. 1 is a block diagram showing a configuration of the wireless communication system 1 according to the embodiment of the present invention.

The wireless communication system 1 has: a plurality of wireless terminals 100; a radio base station 500; and a network 1000.

The wireless terminal 100 is a device that wirelessly transmits and receives data through the radio base station 500. The wireless terminal 100 is, for example, a PHS (Personal Handyphone System) or a mobile phone. For example, an other wireless terminal 100, an information processing device on the Internet accessible through the network 1000,

**3**

etc. correspond to devices that transmit and receive data to/from the wireless terminal 100.

The radio base station 500 is an apparatus that wirelessly transmits and receives data to/from the wireless terminal 100. The radio base station 500 enables transmission and reception of data to/from the wireless terminal 100 by allocating a radio resource of the radio base station 500 to the wireless terminal 100 and utilizing the allocated radio resource. Here, the radio resource is, for example, a resource block (RB). The resource block is configured with a subcarrier, which is a unit of a resource on a frequency, and a symbol, which is a unit of a resource on a temporal axis. More specifically, a time length of the resource block is 0.5 ms, and the resource block forms a pair on the temporal axis. As a result, the radio resource can be allocated for each subframe (each 1 ms).

The network 1000 is connected to the radio base station 500. The network 1000 includes a higher apparatus of the radio base station 500.

For example, when a wireless communication system to which LTE (Long Term Evolution) has been applied is used as an object as the wireless communication system 1, UE (User Equipment) corresponds to the wireless terminal 100, an eNB (evolved Node B) corresponds to the radio base station 500, and an EPC (Evolved Packet Core), which is a core network, corresponds to the network 1000. In this case, for example, an MME (Mobility Management Entity), an SGW (Serving Gateway), a PGW (Packet Data Network Gateway), etc. correspond to higher apparatuses.

Subsequently, a configuration of the radio base station 500 according to the embodiment of the present invention will be explained with reference to Fig. 2. Fig. 2 is a diagram showing a functional block of the radio base station 500 according to the embodiment of the present invention.

The radio base station 500 has a congestion degree estimation unit 510 and a scheduling unit 520.

The congestion degree estimation unit 510 estimates a congestion degree of the radio base station 500, and notifies the scheduling unit 520 of the estimated congestion degree.

The congestion degree may be set to be at least one value of the following values of (1) to (5).

(1) A value that the network 1000 notifies of
(2) The number of wireless terminals 100 connected to the radio base station 500
(3) The number of wireless terminals 100 in which data to be transmitted is present in a downlink buffer in the radio base station 500
(4) The number of wireless terminals 100 estimated that data to be transmitted is present in an uplink buffer in the radio base station 500
(5) A radio resource allocation delay time in the radio base station 500

Here, the downlink buffer retains downlink data sent from the network 1000 to the radio base station 500 until it is distributed and transmitted for each wireless terminal 100. The congestion estimation unit 510 recognizes the number of wireless terminals 100 in which data is present in the downlink buffer by referring to the downlink buffer. Note that the downlink buffer is provided in a storage device of the radio base station 500. The storage device is, for example, a memory, a hard disk, etc.

In addition, the uplink buffer retains data to be transmitted that is generated in the wireless terminal 100. The uplink buffer is provided in a storage device of the wireless terminal 100. The congestion estimation unit 510 estimates a status of the uplink buffer of each wireless terminal 100 based on a BSR (Buffer Status Report) from the wireless terminal 100.

Here, the BSR is information indicating a content to be able to determine whether or not data is retained (present) in the uplink buffer. For example, a retention amount of the data in the uplink buffer of the wireless terminal 100 is shown in the BSR. The congestion estimation unit 510 determines whether or not the data is retained (present) in the uplink buffer in each of the wireless terminals 100 based on the BSR transmitted from each of the wireless terminals 100, and thereby recognizes the number of wireless terminals 100 estimated that the data is present in the uplink buffer.

In addition, as values that the network 1000 notifies of, for example, a value representing a load of a higher apparatus as a numerical value, or a congestion degree of a line in the higher apparatus may be employed. More specifically, as the value that the network 1000 notifies of, for example, a load or a congestion degree is detected in the SGW that transfers data transmitted and received to/from the radio base station 500, and information that indicates a value representing the load or the congestion degree detected by the SGW is transmitted to the radio base station 500. The congestion estimation unit 510 then recognizes as the congestion degree the value representing the load or the congestion degree indicated by the information transmitted from the SGW.

In addition, the radio resource allocation delay time in the radio base station 500, for example, may be set to be at least one value of the following (a) to (f).

(a) A time spent until data to be transmitted reaches the downlink buffer, and the radio resource is allocated in order to transmit the data
(b) A time spent until data to be transmitted is estimated to have reached the uplink buffer, and the radio resource is allocated in order to transmit the data

(c) A time when each data to be transmitted is retained in the downlink buffer

(d) A time when each data to be transmitted is estimated to be retained in the uplink buffer

(e) A maximum value in calculated times obtained by calculating a time when the radio resource is not allocated to the wireless terminal 100 for each wireless terminal 100, while data to be transmitted is retained in the downlink buffer with respect to the wireless terminal 100

(f) A maximum value in calculated times obtained by calculating a time when the radio resource is not allocated to the wireless terminal 100 for each wireless terminal 100, while data to be transmitted is estimated to be retained in the uplink buffer with respect to the wireless terminal 100

Namely, the congestion estimation unit 510 detects at least one time of the above-described (a) to (f). Here, the radio base station 500 cannot directly recognize the status of the buffer of the wireless terminal 100. Therefore, the congestion estimation unit 510 may set the time of the above-described (b) to be a time until the radio resource is allocated to the wireless terminal 100 after the BSR is received from the wireless terminal 100. In addition, the congestion estimation unit 510 may set the time of the above-described (d) to be a time until the data stored in the uplink buffer is received from the wireless terminal 100 after the BSR is received from the wireless terminal 100.

In addition, as for the above-described (e) and (f), the congestion estimation unit 510 may destroy a record of the maximum value in which a predetermined time has elapsed after the maximum value is calculated, and may newly acquire a maximum value according to a newest congestion condition.

In addition, the congestion degree may be estimated by calculation using at least one value of the following values of (1) to (5). Note that the values of the following (1) to (5) are similar to the values of the above-mentioned (1) to (5).

(1) A value that the network 1000 notifies of

(2) The number of wireless terminals 100 connected to the radio base station 500

(3) The number of wireless terminals 100 in which data to be transmitted is present in the downlink buffer in the radio base station 500

(4) The number of wireless terminals 100 estimated that data to be transmitted is present in the uplink buffer in the radio base station 500

(5) A radio resource allocation delay time in the radio base station 500

The congestion degree calculated at this time may be calculated by any calculation formula as long as it becomes larger as the values of the above-described (1) to (5) become larger.

In addition, the congestion degree or the calculated congestion degree may be multivalued. In addition, a multiple value may also be set to be a binary for representing two statuses of a congested status and an uncongested status, or may also be a multiple value larger than two in order to represent a level of congestion in stages. Namely, for example, a congestion degree C may be estimated by calculation using the following Formula (1).

[Formula 1]

$$
C = \begin{cases} 0 & N\_dl\_user < N\_threshold\ 1 \\ 1 & N\_threshold\ 1 \le N\_dl\_user < N\_threshold\ 2 \\ 2 & N\_threshold\ 2 \le N\_dl\_user \end{cases} \cdots (1)
$$

N_dl_user is the number of wireless terminals 100 in which data to be transmitted is present in the downlink buffer. N_threshold1 and N_threshold2 are threshold values set to the radio base station 500 as parameters, respectively. A fixed value of the parameter may be previously incorporated in the radio base station 500. In this case, the parameter is, for example, previously stored in the storage device of the radio base station 500. In addition, the parameter may be set to the radio base station 500 by a maintenance and management server (not shown) that can communicate with the radio base station 500. Specifically, when an administrator inputs a parameter to the maintenance and management server through an input device of the maintenance and management server, the maintenance and management server transmits information indicating the input parameter to the radio base station 500. Subsequently, the radio base station 500 sets as the parameter the parameter indicated by the information transmitted from the maintenance and management server. Note that the input device is, for example, a mouse, a keyboard, a touch panel, etc.

In addition, the congestion estimation unit 510 may calculate a congestion degree according to the number of wireless terminals 100 in which data is present in the buffer in each of the uplink and the downlink, and may notify the scheduling unit 520 of an uplink congestion degree and a downlink congestion degree. In addition, when the radio base station 500 has a plurality of sectors, a congestion degree may be estimated in each sector to apply to the each sector. Namely, the congestion estimation unit 510 may estimate the congestion degree for each sector to notify the scheduling unit 520 of the congestion degree, and the scheduling unit 520 may control a radio resource amount allocated to the wireless terminal 100 in the notified sector according to the congestion degree of the sector.

In addition, the congestion degree estimation unit 510 may notify the network 1000 of the estimated congestion degree. The network 1000 changes setting of QoS (Quality of Service) to the wireless terminal 100 in the network 1000 or limits data transmitted from the network 1000 to the radio base station 500 by getting to know the congestion degree, and thereby it becomes possible to suppress the congestion degree of the radio base station 500. For example, the congestion degree estimation unit 510 notifies the higher apparatus of the network 1000 of the congestion degree, and the higher apparatus transmits data more preferentially to the radio base station 500 having a small congestion degree than the radio base station 500 having a large congestion degree based on the congestion degrees that the plurality of radio base stations 500 have notified of. For example, in QoS control, the PGW lowers a priority of data transmitted and received to/from the radio base station 500 having the large congestion degree and raises the priority of data transmitted and received to/from the radio base station 500 having the small congestion degree.

The scheduling unit 520 controls the radio resource amount to be allocated based on the congestion degree that the congestion degree estimation unit 510 has notified of, and allocates the radio resource to each wireless terminal 100. Specifically, the scheduling unit 520 sets to be small an upper-limit value of the radio resource allocated to the wireless terminal 100 when the congestion degree is large, and sets to be large the upper-limit value of the radio resource allocated to the wireless terminal 100 when the congestion degree is small. Namely, the scheduling unit 520 sets the upper-limit value of the radio resource so that the upper-limit value of the radio resource becomes smaller as the congestion degree becomes larger.

According to the above, since the upper-limit value of the radio resource allocated to the wireless terminal 100 is set to be small when the radio base station 500 is congested, a radio resource amount consumed by the radio resource allocation to the wireless terminal 100 can be reduced. Accordingly, the radio resource is allocated to a number of wireless terminals 100 little by little under a situation where the radio base station 500 is congested, and thereby radio resource allocation delay can be reduced. Namely, it can be prevented that the radio resource is allocated to one wireless terminal 100 without limitation, and that it takes time before the radio resource is allocated to the other wireless terminals 100.

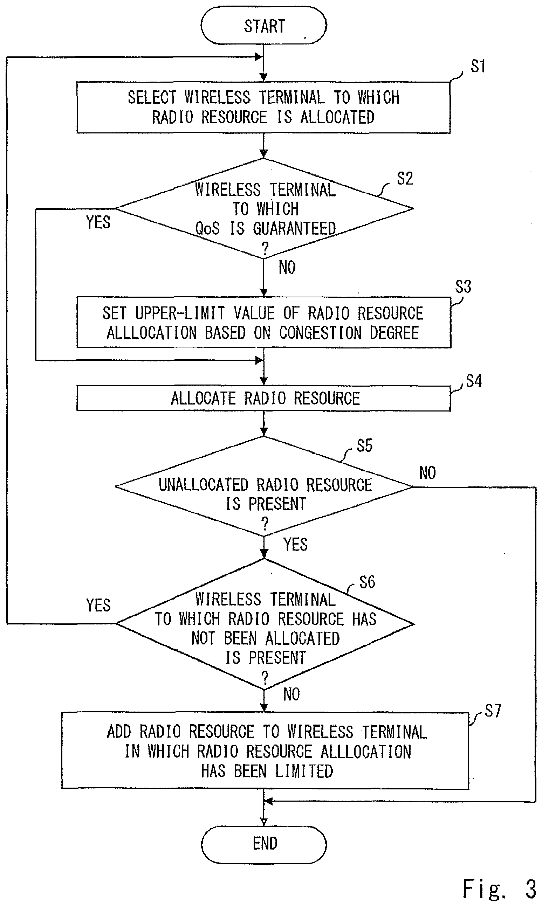

Subsequently, one example of operation of the scheduling unit 520 will be explained with reference to Fig. 3. Fig. 3 is a flow chart showing one example of operation of the scheduling unit according to the embodiment of the present invention.

The scheduling unit 520 selects a wireless terminal 100 to which a radio resource is allocated (S1). For example, as a method to select the wireless terminal 100, Round Robin or Proportional Fairness known as scheduling schemes may be used.

The scheduling unit 520 determines whether or not the selected wireless terminal 100 is an object of a QoS guarantee (S2). If the selected wireless terminal 100 is the object of the QoS guarantee, processing proceeds to step S4 (S2: Yes).

Meanwhile, if the selected wireless terminal 100 is not the object of the QoS guarantee, processing proceeds to step S3 (S2: No). The scheduling unit 520 sets an upper-limit value of the radio resource allocated to the wireless terminal 100 based on a congestion degree (S3).

Here, as a setting method of the upper-limit value of the radio resource, for example, in a case where notification of the number of wireless terminals 100 in which data to be transmitted is present in the downlink buffer in the radio base station 500, and a radio resource allocation delay time in the radio base station 500 have been performed as the congestion degree, when the number of wireless terminals 100 in which data to be transmitted is present in the downlink buffer is not less than a threshold value set by a parameter, a value R_u calculated by the following Formula (2) is set to be the upper-limit value of the radio resource to be allocated.

[Formula 2]

$$R\_u = \begin{cases} \left\lceil R\_all \cdot \dfrac{t\_threshold}{t\_delay} \right\rceil & t\_delay > t\_threshold \\ R\_all & t\_delay \leq t\_threshold \end{cases} \quad \cdots \ (2)$$

R_all is a threshold value set as the whole number of radio resources, t_delay is as a radio resource allocation delay time, and t_threshold is as a parameter. A fixed value of the parameter may be previously incorporated in the radio base station 500. In this case, the parameter is, for example, previously stored in the storage device of the radio base station 500. In addition, the parameter may be set to the radio base station 500 by the maintenance and management server as mentioned above. In addition, an upper-limit value R_u of the radio resource may be calculated separately for the uplink and the downlink. Consequently, the above-mentioned parameter regarding the upper-limit value of the radio resource allocation may also be set separately by a calculation formula of the upper-limit value R_u of the uplink radio resource and a calculation formula of the upper-limit value R_u of the downlink radio resource.

As mentioned above, when the number of wireless terminals 100 in which data to be transmitted is present in the downlink buffer is not less than the threshold value, the upper-limit value R_u of the radio resource is decided by Formula (2). Namely, when the number of wireless terminals 100 in which data to be transmitted is present in the downlink buffer is less than the threshold value, the whole number of radio resources R_all may be set to be the upper-limit value R_u of the radio resource. Additionally, when the radio resource allocation delay time t_delay is not more than the threshold value t_threshold in Formula (2), the whole number of radio resources R_all is set to be the upper-limit value R_u of the radio resource. Namely, when the whole number of radio resources R_all is set to be the upper-limit value R_u of the radio resource, substantially, the upper-limit value of the radio resource is not placed. Meanwhile, when the radio resource allocation delay time t_delay is larger than the threshold value t_threshold in Formula (2), a value obtained by multiplying the whole number of radio resources R_all by a value obtained by dividing the threshold value t_threshold by the radio resource allocation delay time t_delay is set as the upper-limit value R_u of the radio resource.

According to the above, when the congestion degree (the number of wireless terminals 100 in which data to be transmitted is present in the downlink buffer, and the radio resource allocation delay time t_delay) of the radio base station 500 is small, the upper-limit value of the radio resource allocated to the wireless terminal 100 is set to be large, while when the congestion degree of the radio base station 500 is large, the upper-limit value of the radio resource allocated to the wireless terminal 100 is set to be small.

In addition, as the setting method of the upper-limit value of the radio resource, for example, when the congestion degree that the congestion degree estimation unit 510 notifies of is one value, and is a binary of a congested status and an uncongested status, the upper-limit value of the radio resource allocation may be set in the congested status, and the upper-limit value of the radio resource allocation may not be set in the uncongested status (the whole number of radio resources R_all is set as the upper-limit value). Note that an arbitrary value can be set to be the upper-limit value of the radio resource allocation in the congested status as a parameter previously or by the maintenance and management server as mentioned above.

When the congestion degree that the congestion degree estimation unit 510 notifies of is one value, and is a multiple value larger than the binary, a plurality of upper-limit values of radio resource allocation can be set as parameters so as to correspond to each of values that the multiple value can take, and the upper-limit value of the radio resource is set to be smaller as the congestion degree indicates a more congested status. The fixed value may be previously incorporated in the radio base station 500 as the parameter of the upper-limit value of the radio resource allocation as mentioned above, or the parameter may be set to the radio base station 500 by the maintenance and management server. In addition, the parameter of the upper-limit value of the radio resource allocation may be set separately for the uplink and the downlink.

The upper-limit value of the radio resource allocation is set according to the congestion degree as described above, whereby the number of wireless terminals 100 to which the radio resource is allocated for each radio resource allocation opportunity can be increased, and delay can be suppressed. In addition, in a case of a wireless system using FDMA (Frequency Division Multiple Access), transmission power per frequency can be increased by limiting the radio resource allocated to one wireless terminal 100, and thereby efficient communication can also be performed.

In addition, the upper-limit value of the radio resource allocation is set only to the wireless terminal 100, which is not the object of the QoS guarantee, and thereby it becomes possible to maintain the QoS guarantee to the wireless terminal 100, which is the object of the QoS guarantee, also in the radio base station 500 being congested.

The scheduling unit 520 allocates the radio resource to the selected wireless terminal 100 (S4). For example, a smaller value of a radio resource amount to be able to finish transmitting data to be transmitted retained in the buffer, and the upper-limit value of the radio resource allocation may be used as a radio resource amount to be allocated.

The scheduling unit 520 determines whether or not an unallocated radio resource is present (S5). If the unallocated radio resource is present, processing proceeds to step S6 (S5: No), and if the unallocated radio resource is not present, radio resource allocation is ended.

The scheduling unit 520 determines whether or not the wireless terminal 100 to which the radio resource has not been allocated is present (S6). If the wireless terminal 100 to which the radio resource has not been allocated is present (S6: Yes), processing proceeds to step S1, and the scheduling unit 520 reselects the wireless terminal 100 to which the radio resource is allocated. Meanwhile, if the wireless terminal 100 to which the radio resource has not been allocated is not present (S6: No), processing proceeds to step S7.

The scheduling unit 520 eliminates the upper-limit value of radio resource allocation with respect to the wireless terminal 100 in which the radio resource allocation has been limited, and adds the radio resource to the wireless terminal 100 (S7). As a method to add the radio resource, for example, the wireless terminal 100 is selected in the order that the radio resource has been allocated in step S4, and the radio resource is added to the wireless terminal 100 until the radio resource is used up, or the radio resource amount reaches the amount to be able to finish transmitting the data to be transmitted retained in the buffer. When the unallocated radio resource is present, and the wireless terminal 100 to which the radio resource has not been allocated is not present, the upper-limit value of radio resource allocation is eliminated from and the radio resource is additionally allocated to the wireless terminal 100 to which the upper-limit value has been set and the radio resource has been allocated, whereby the unallocated radio resource caused due to excessive limit of the radio resource to be allocated can be eliminated, and thus efficient communication can be achieved.

As explained above, the radio base station 500 according to the embodiment controls the radio resource amount allocated to the wireless terminal 100 based on the congestion degree. According to the above, even when the radio base station 500 is congested, the radio resource amount allocated to the individual wireless terminal 100 is reduced, and occurrence of the wireless terminal 100 waiting for radio resource allocation can be suppressed. Namely, delay until the radio resource is allocated to the wireless terminal 100 can be suppressed. In addition, according to the above, it becomes possible to perform efficient communication by suppressing the delay.

<Summary of Embodiment of the Present Invention>

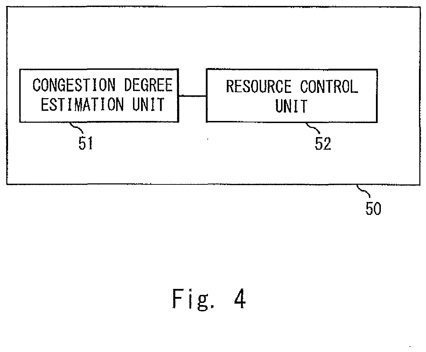

Subsequently, a base station apparatus 50 serving as a summary of the radio base station 500 according to the embodiment of the present invention will be explained with reference to Fig. 4. Fig. 4 is a diagram showing a functional block of the base station apparatus according to the embodiment of the present invention.

The base station apparatus 50 has a congestion degree estimation unit 51 and a resource control unit 52. The base station apparatus 50 is the apparatus that allocates a resource for communication to a terminal device.

The congestion degree estimation unit 51 estimates a congestion degree in the base station apparatus 50. The congestion degree estimation unit 51 corresponds to the congestion degree estimation unit 510.

The resource control unit 52 controls a resource allocation amount to the terminal device based on the congestion degree estimated by the congestion degree estimation unit 51. The resource control unit 52 corresponds to the scheduling unit 520.

Note that the present invention is not limited to the above-described embodiment, and that the embodiment can be appropriately changed without departing from the spirit of the invention.

For example, although in the above-mentioned embodiment, a case has been exemplified where the wireless terminal 100 is used as an object as the terminal device, and where the radio base station 500 is used as an object as the base station apparatus, the present invention is not limited to this. For example, the present invention may be applied to a system in which a terminal device and a base station apparatus communicate with each other by wire. In addition, not only wireless communication but wired communication may be mixedly used in the above-mentioned wireless communication system 1.

The radio base station 500 according to the embodiment of the present invention can be configured by a computer (the radio base station 500) or a processor of the computer executing a program that achieves the function of the above-mentioned embodiment.

In addition, the program is stored using various types of non-transitory computer readable media, and can be supplied to the computer. The non-transitory computer readable medium includes various types of tangible storage media. Examples of the non-transitory computer readable medium includes: a magnetic recording medium (for example, a flexible disk, a magnetic tape, a hard disk drive); a magnetic optical recording medium (for example, a magnetic optical disk); a CD-ROM (Read Only Memory); a CD-R; a CD-R/W; and a semiconductor memory (for example, a mask ROM, a PROM (Programmable ROM), an EPROM (Erasable PROM), a flash ROM, an RAM (Random Access Memory)). In addition, the program may be supplied to the computer by various types of transitory computer readable media. Examples of the transitory computer readable medium include an electrical signal, an optical signal, and an electromagnetic wave. The transitory computer readable medium can supply the program to the computer through a wired communication channel, such as an electric wire and an optical fiber, or a wireless communication channel.

Hereinbefore, although the invention in the present application has been explained with reference to the embodiment, the invention in the present application is not limited by the above. Various changes that can be understood by those skilled in the art within the scope of the invention can be made to a configuration and a detail of the invention in the present application.

This application claims priority based on Japanese Patent Application No. 2012-152624 filed on July 6, 2012.

**Reference Signs List**

50      base station apparatus

| | |
|---|---|
| 51 | congestion degree estimation unit |
| 52 | resource control unit |
| 100 | wireless terminal |
| 500 | radio base station |
| 510 | congestion degree estimation unit |
| 520 | scheduling unit |
| 1000 | network |

**Claims**

1.  A base station apparatus (50) that allocates a resource for communication to a terminal device (100), comprising:

    congestion degree estimation means (51) for estimating a congestion degree in the base station apparatus (50); and
    resource control means (52) for controlling a resource allocation amount to the terminal device (100) based on the congestion degree estimated by the congestion degree estimation means (51), wherein
    the resource control means (52) is configured to set an upper-limit value of the resource allocation so that the upper-limit value of the resource allocation becomes smaller as the congestion degree becomes larger.

2.  The base station apparatus (50) according to Claim 1, wherein the resource control means (52) is configured to set a whole number of resources as the upper-limit value of the resource allocation for a terminal device (100) which is an object of a QoS guarantee, and to set the upper-limit value of the resource allocation so that the upper-limit value of the resource allocation becomes smaller as the congestion degree becomes larger for a terminal device (100) which is not the object of the QoS guarantee.

3.  The base station apparatus (50) according to Claim 2, wherein when an unallocated resource is present with a result that the resource control means (52) places the resource allocation upper-limit to allocate the resource to the terminal device (100), the resource control means (52) is configured to eliminate the resource allocation upper-limit and adds a resource allocated to the terminal device (100).

4.  The base station apparatus (50) according to any one of Claims 1 to 3, wherein the congestion degree estimation means (51) is configured to calculate the congestion degree, in the estimation of the congestion degree, based on at least one of a value that a network connected to the base station apparatus (50) notifies of, the number of terminal devices connected to the base station apparatus (50), the number of terminal devices in which data to be transmitted is present in a downlink buffer in the base station apparatus (50), the number of terminal devices estimated that data to be transmitted is present in an uplink buffer in the base station apparatus (50), and a resource allocation delay time in the base station apparatus (50).

5.  The base station apparatus (50) according to Claim 4, wherein the congestion degree estimation means (51) is configured to set as the congestion degree, in the estimation of the congestion degree, one value of a value that a network connected to the base station apparatus (50) notifies of, the number of terminal devices connected to the base station apparatus (50), the number of terminal devices in which data to be transmitted is present in a downlink buffer in the base station apparatus (50), the number of terminal devices estimated that data to be transmitted is present in an uplink buffer in the base station apparatus (50), and a resource allocation delay time in the base station apparatus (50).

6.  The base station apparatus (50) according to Claim 2 or 3, wherein the resource control means (52) is configured to decide one of fixed values set to the base station apparatus (50) by an external device as a resource allocation upper-limit in deciding the resource allocation upper-limit to the terminal device (100) based on the congestion degree.

7.  The base station apparatus (50) according to any one of Claims 1 to 6, wherein the base station apparatus (50) is configured to notify the network of the congestion degree estimated by the congestion degree estimation means (51).

8.  The base station apparatus (50) according to any one of Claims 1 to 7, wherein
    the base station apparatus (50) is a radio base station,
    the terminal device (100) is a wireless terminal, and
    the resource is a radio resource.

9. A communication control method for allocating a resource for communication to a terminal device (100) comprising:

an estimating step of estimating a congestion degree by communication of the terminal device (100), and
a control step of controlling a resource allocation amount to the terminal device (100) based on the estimated congestion degree, wherein
the control step comprises setting the upper-limit value of the resource allocation so that the upper-limit value of the resource allocation becomes smaller as the congestion degree becomes larger.

10. A non-transitory computer readable medium storing a communication control program for allocating a resource for communication to a terminal device (100) in a base station apparatus (50), the communication control program making the base station apparatus (50) execute:

an estimating process of estimating a congestion degree by communication of the terminal device (100); and
a control process of controlling a resource allocation amount to the terminal device (100) based on the estimated congestion degree, wherein
the control process comprises setting the upper-limit value of the resource allocation so that the upper-limit value of the resource allocation becomes smaller as the congestion degree becomes larger.

**Patentansprüche**

1. Basisstationsvorrichtung (50), die eine Ressource für die Kommunikation an eine Endgerätvorrichtung (100) zuweist, die aufweist:

eine Überlastungsgrad-Schätzeinrichtung (51) zum Schätzen eines Überlastungsgrads in der Basisstationsvorrichtung (50); und
eine Ressourcensteuereinrichtung (52) zum Steuern einer Ressourcenzuweisungsmenge an die Endgerätvorrichtung (100) basierend auf dem von der Überlastungsgrad-Schätzeinrichtung (51) geschätzten Überlastungsgrad, wobei
die Ressourcensteuereinrichtung (52) konfiguriert ist, um einen oberen Grenzwert für die Ressourcenzuweisung derart festzulegen, dass der obere Grenzwert der Ressourcenzuweisung kleiner wird, wenn der Überlastungsgrad höher wird.

2. Basisstationsvorrichtung (50) nach Anspruch 1, wobei die Ressourcensteuereinrichtung (52) konfiguriert ist, um eine ganze Zahl von Ressourcen als den oberen Grenzwert für die Ressourcenzuweisung für eine Endgerätvorrichtung (100), die ein Gegenstand einer QoS-Garantie ist, festzulegen, und den oberen Grenzwert für die Ressourcenzuweisung derart festzulegen, dass der obere Grenzwert für die Ressourcenzuweisung kleiner wird, wenn der Überlastungsgrad für eine Endgerätvorrichtung (100), die kein Gegenstand der QoS-Garantie ist, höher wird.

3. Basisstationsvorrichtung (50) nach Anspruch 2, wobei die Ressourcensteuereinrichtung (52) konfiguriert ist, um, wenn eine nicht zugewiesene Ressource mit einem Ergebnis vorhanden ist, dass die Ressourcensteuereinrichtung (52) die Obergrenze für die Ressourcenzuweisung einstellt, um die Ressource an die Endgerätvorrichtung (100) zuzuweisen, die Obergrenze für die Ressourcenzuweisung zu eliminieren, und eine Ressource hinzufügt, die der Endgerätvorrichtung (100) zugewiesen wird.

4. Basisstationsvorrichtung (50) nach einem der Ansprüche 1 bis 3, wobei die Überlastungsgrad-Schätzeinrichtung (51) konfiguriert ist, um bei der Schätzung des Überlastungsgrads den Überlastungsgrad basierend auf einem Wert, den ein mit der Basisstationsvorrichtung (50) verbundenen Netzwerk mitteilt, und/oder der Anzahl von Endgerätvorrichtungen, die mit der Basisstationsvorrichtung (50) verbunden sind, und/oder der Anzahl von Endgerätvorrichtungen, in denen Daten übertragen werden sollen, die in einem Abwärtsverbindungspuffer in der Basisstationsvorrichtung (50) vorhanden sind, und/oder Anzahl von Endgerätvorrichtungen, für die geschätzt wird, dass Daten, die übertragen werden sollen, in einem Aufwärtsverbindungspuffer in der Basisstationsvorrichtung (50) vorhanden sind, und/oder einer Ressourcenzuweisungsverzögerungszeit in der Basisstationsvorrichtung (50) zu berechnen.

5. Basisstationsvorrichtung (50) nach Anspruch 4, wobei die Überlastungsgrad-Schätzeinrichtung (51) konfiguriert ist, um bei der Schätzung des Überlastungsgrads als den Überlastungsgrad einen Wert von einem Wert, den ein mit der Basisstationsvorrichtung (50) verbundenen Netzwerk mitteilt, und/oder der Anzahl von Endgerätvorrichtungen, die mit der Basisstationsvorrichtung (50) verbunden sind, und/oder der Anzahl von Endgerätvorrichtungen, in denen Daten übertragen werden sollen, die in einem Abwärtsverbindungspuffer in der Basisstationsvorrichtung (50) vorhanden sind, und/oder Anzahl von Endgerätvorrichtungen, für die geschätzt wird, dass Daten, die übertragen werden sollen, in einem Aufwärtsverbindungspuffer in der Basisstationsvorrichtung (50) vorhanden sind, und/oder einer Ressourcenzuweisungsverzögerungszeit in der Basisstationsvorrichtung (50) festzulegen.

6. Basisstationsvorrichtung (50) nach Anspruch 2 oder 3, wobei die Ressourcensteuereinrichtung (52) konfiguriert ist, um bei der Bestimmung der Obergrenze für die Ressourcenzuweisung an die Endgerätvorrichtung (100) basierend auf dem Überlastungsgrad einen der festen Werte, die für die Basisstationsvorrichtung (50) durch eine externe Vorrichtung festgelegt werden, als eine Obergrenze für die Ressourcenzuweisung zu bestimmen.

7. Basisstationsvorrichtung (50) nach einem der Ansprüche 1 bis 6, wobei die Basisstationsvorrichtung (50) konfiguriert ist, um dem Netzwerk den von der Überlastungsgrad-Schätzeinrichtung (51) geschätzten Überlastungsgrad zu melden.

8. Basisstationsvorrichtung (50) nach einem der Ansprüche 1 bis 7, wobei
die Basisstationsvorrichtung (50) eine Funkbasisstation ist,
die Endgerätvorrichtung (100) ein drahtloses Endgerät ist, und
die Ressource eine Funkressource ist.

9. Kommunikationssteuerverfahren zum Zuweisen einer Ressource für die Kommunikation an eine Endgerätvorrichtung (100), die aufweist:

einen Schätzschritt zum Schätzen eines Überlastungsgrads durch die Kommunikation der Endgerätvorrichtung (100); und

einen Steuerschritt zum Steuern einer Ressourcenzuweisungsmenge an die Endgerätvorrichtung (100) basierend auf dem geschätzten Überlastungsgrad, wobei
der Steuerschritt das Festlegen des oberen Grenzwerts für die Ressourcenzuweisung derart aufweist, dass der obere Grenzwert der Ressourcenzuweisung kleiner wird, wenn der Überlastungsgrad höher wird.

10. Dauerhaftes computerlesbares Medium, das ein Kommunikationssteuerprogramm zum Zuweisen einer Ressource für die Kommunikation an eine Endgerätvorrichtung (100) in einer Basisstationsvorrichtung (50) speichert, wobei das Kommunikationssteuerprogramm die Basisstationsvorrichtung (50) ausführen lässt:

ein Schätzverfahren zum Schätzen eines Überlastungsgrads durch die Kommunikation der Endgerätvorrichtung (100); und
ein Steuerverfahren zum Steuern einer Ressourcenzuweisungsmenge an die Endgerätvorrichtung (100) basierend auf dem geschätzten Überlastungsgrad, wobei
das Ressourcensteuerverfahren das Festlegen des oberen Grenzwerts für die Ressourcenzuweisung derart aufweist, dass der obere Grenzwert der Ressourcenzuweisung kleiner wird, wenn der Überlastungsgrad höher wird.

**Revendications**

1. Appareil de station de base (50) qui alloue une ressource pour une communication à un dispositif terminal (100), comprenant :

des moyens d'estimation de degré de congestion (51) pour estimer un degré de congestion dans l'appareil de station de base (50) ; et
des moyens de commande de ressources (52) pour commander une quantité d'allocation de ressource au dispositif terminal (100) sur la base du degré de congestion estimé par les moyens d'estimation de degré de congestion (51), dans lequel
les moyens de commande de ressources (52) sont configurés pour fixer une valeur de limite supérieure de l'allocation de ressource de manière que la valeur de limite supérieure de l'allocation de ressource devienne plus petite lorsque le degré de congestion devient plus grand.

2. Appareil de station de base (50) selon la revendication 1, dans lequel les moyens de commande de ressources (52) sont configurés pour fixer un nombre global de ressources comme la valeur de limite supérieure de l'allocation de ressource pour un dispositif terminal (100) qui fait l'objet d'une garantie de QoS, et pour fixer la valeur de limite supérieure de l'allocation de ressource de manière que la valeur de limite supérieure de l'allocation de ressource devienne plus petite lorsque le degré de congestion devient plus grand pour un dispositif terminal (100) qui ne fait pas l'objet de la garantie de QoS.

3. Appareil station de base (50) selon la revendication 2, dans lequel, quand une ressource non allouée est présente avec pour résultat que les moyens de commande de ressources (52) placent la limite supérieure d'allocation de ressource pour allouer la ressource au dispositif terminal (100), les moyens de commande de ressources (52) sont configurés pour éliminer la limite supérieure d'allocation de ressource et ajouter une ressource allouée au dispositif terminal (100).

4. Appareil station de base (50) selon l'une quelconque des revendications 1 à 3, dans lequel les moyens d'estimation de degré de congestion (51) sont configurés pour calculer le degré de congestion, dans l'estimation du degré de congestion, sur la base d'au moins un parmi une valeur que notifie un réseau connecté à l'appareil de station de base (50), le nombre de dispositifs terminaux connectés à l'appareil de station de base (50), le nombre de dispositifs terminaux dans lesquels des données à transmettre sont présentes dans une mémoire tampon de liaison descendante dans l'appareil de station de base (50), le nombre de dispositifs terminaux ayant estimé que des données à transmettre sont présentes dans une mémoire tampon de liaison montante dans l'appareil de station de base (50) et un temps de retard d'allocation de ressource dans l'appareil de station de base (50).

5. Appareil station de base (50) selon la revendication 4, dans lequel les moyens d'estimation de degré de congestion (51) sont configurés pour fixer comme le degré de congestion, dans l'estimation du degré de congestion, une valeur parmi une valeur que notifie un réseau connecté à l'appareil de station de base (50), le nombre de dispositifs terminaux connectés à l'appareil de station de base (50), le nombre de dispositifs terminaux dans lesquels des données à transmettre sont présentes dans une mémoire tampon de liaison descendante dans l'appareil de station de base (50), le nombre de dispositifs terminaux ayant estimé que des données à transmettre sont présentes dans une mémoire tampon de liaison montante dans l'appareil de station de base (50) et un temps de retard d'allocation de ressource dans l'appareil de station de base (50).

6. Appareil station de base (50) selon la revendication 2 ou 3, dans lequel les moyens de commande de ressources (52) sont configurés pour décider une parmi des valeurs fixes établies pour l'appareil de station de base (50) par un dispositif externe comme une limite supérieure d'allocation de ressource en décidant la limite supérieure d'allocation de ressource pour le dispositif terminal (100) sur la base du degré de congestion.

7. Appareil station de base (50) selon l'une quelconque des revendications 1 à 6, dans lequel l'appareil de station de base (50) est configuré pour notifier au réseau le degré de congestion estimé par les moyens d'estimation de degré de congestion (51).

8. Appareil station de base (50) selon l'une quelconque des revendications 1 à 7, dans lequel
l'appareil de station base (50) est une station de base radio,
le dispositif terminal (100) est un terminal sans fil, et
la ressource est une ressource radio.

9. Procédé de commande de communication pour allouer une ressource pour une communication à un dispositif terminal (100), comprenant :

une étape d'estimation pour estimer un degré de congestion par communication du dispositif terminal (100), et
une étape de commande pour commander une quantité d'allocation de ressource au dispositif terminal (100) sur la base du degré de congestion estimé, dans lequel
l'étape de commande comprend le réglage d'une valeur de limite supérieure de l'allocation de ressource de manière que la valeur de limite supérieure de l'allocation de ressource devienne plus petite lorsque le degré de congestion devient plus grand.

10. Support lisible par ordinateur non transitoire stockant un programme de commande de communication pour allouer une ressource pour une communication à un dispositif terminal (100) dans un appareil de station de base (50), le programme de commande de communication faisant exécuter à l'appareil de station de base (50) :

un processus d'estimation pour estimer un degré de congestion par communication du dispositif terminal (100) ;

et

un processus de commande pour commander une quantité d'allocation de ressource au dispositif terminal (100) sur la base du degré de congestion estimé, dans lequel

le processus de commande comprend le réglage d'une valeur de limite supérieure de l'allocation de ressource de manière que la valeur de limite supérieure de l'allocation de ressource devienne plus petite lorsque le degré de congestion devient plus grand.

Fig. 1

Fig. 2

| CONGESTION DEGREE ESTIMATION UNIT | SCHEDULING UNIT |
|---|---|
| 510 | 520 |

500

```
                        ┌──────────┐
                        │  START   │
                        └────┬─────┘
                             │
     ┌───────────────────────┤
     │                       ▼                              S1
     │        ┌──────────────────────────────────┐
     │        │   SELECT WIRELESS TERMINAL TO WHICH │
     │        │     RADIO RESOURCE IS ALLOCATED     │
     │        └──────────────┬───────────────────┘
     │                       ▼
     │                                                      S2
     │            ◇ WIRELESS TERMINAL
     │     YES    ◇     TO WHICH
     │  ◀─────────◇  QoS IS GUARANTEED
     │            ◇         ?
     │                       │ NO
     │                       ▼                              S3
     │        ┌──────────────────────────────────┐
     │        │  SET UPPER-LIMIT VALUE OF RADIO RESOURCE │
     │        │  ALLLOCATION BASED ON CONGESTION DEGREE  │
     │        └──────────────┬───────────────────┘
     │                       ▼                              S4
     │        ┌──────────────────────────────────┐
     │        │      ALLOCATE RADIO RESOURCE      │
     │        └──────────────┬───────────────────┘
     │                       ▼                              S5
     │            ◇ UNALLOCATED RADIO RESOURCE      NO
     │            ◇        IS PRESENT          ──────────┐
     │            ◇            ?                         │
     │                       │ YES                       │
     │                       ▼                    S6      │
     │     YES    ◇   WIRELESS TERMINAL                   │
     └────────────◇ TO WHICH RADIO RESOURCE HAS          │
                  ◇    NOT BEEN ALLOCATED                 │
                  ◇        IS PRESENT                     │
                  ◇            ?                          │
                       │ NO                               │
                       ▼                          S7      │
        ┌──────────────────────────────────┐             │
        │ ADD RADIO RESOURCE TO WIRELESS TERMINAL │       │
        │  IN WHICH RADIO RESOURCE ALLLOCATION    │       │
        │         HAS BEEN LIMITED                │       │
        └──────────────┬───────────────────┘             │
                       ▼◀───────────────────────────────┘
                  ┌──────────┐
                  │   END    │
                  └──────────┘
```

Fig. 3

| CONGESTION DEGREE ESTIMATION UNIT | RESOURCE CONTROL UNIT |
|---|---|
| 51 | 52 |

50

Fig. 4

**EP 2 871 897 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2268092 A1
- EP 2385721 A1
- WO 2009116497 A
- JP 2012152624 A